# EUROPEAN PATENT APPLICATION

(11) **EP 2 634 405 A1**
(43) Date of publication of application: **04.09.2013**
(21) Application number: 11836322.5
(22) Date of filing: 26.10.2011
(51) Int. Cl.: F02D 23/00, F02B 37/10, F02B 37/12, F02B 37/24, F02D 9/02, F02D 9/06, F02D 43/00, F02D 45/00

(54) **INTERNAL COMBUSTION ENGINE EXHAUST BRAKE CONTROL METHOD AND DEVICE**

(30) Priority: 29.10.2010 JP 2010244384
(71) Applicant: Isuzu Motors, Ltd., Tokyo 140-8722 (JP)
(72) Inventor: WATANABE Yoshinobu, Fujisawa-shi Kanagawa 252-8501 (JP); NITTA Junichiro, Fujisawa-shi Kanagawa 252-8501 (JP)
(74) Representative: Schaumburg, Thoenes, Thurn, Landskron, Eckert
(86) International application number: PCT/JP2011/074651
(87) International publication number: WO 2012/057189

(57) **Abstract**

Provided is an internal combustion engine exhaust brake control method capable of increasing a braking force by increasing an exhaust pipe internal pressure when performing exhaust brake control by a vehicle in which an electric turbocharger is connected to an intake system of an engine. The method is a method of driving an electric turbocharger (11) to increase a compressor rotation speed to a predetermined rotation speed and to increase an intake air amount when performing exhaust brake control by a vehicle in which the electric turbocharger (11) is connected to an intake system of an engine (10).

## Description

### TECHNICAL FIELD

The present invention relates to an internal combustion engine exhaust brake control method and an internal combustion engine exhaust brake control device for obtaining a braking force by increasing an exhaust pipe internal pressure to increase an intake and exhaust resistance and to increase a rotation resistance of an engine.

### BACKGROUND ART

An exhaust brake which is usually mounted as a kind of an assist brake on a truck, a bus or the like having a vehicle weight of 3.5 t or more includes a valve (opening and closing valve) which is attached to an exhaust pipe at the downstream side of an engine, and a braking force is exerted by closing the opening and closing valve so as to close the exhaust pipe.

The opening and closing valve is opened or closed by a force generated by a compression or a negative pressure of air or electricity, and in general, the opening and closing valve is used as an exhaust brake while being closed only in a state where a clutch is connected and an accelerator is not stepped on.

As for the operation principle, when the opening and closing valve is closed, the exhaust pipe internal pressure increases, so that the engine is operated as a compressor. Accordingly, the intake and exhaust resistance (pumping loss) increases, and the rotation resistance of the engine increases, so that the braking force increases. That is, it can be said that the exhaust brake is a device which amplifies the braking force of the engine brake.

Next, the derivative method of use of the exhaust brake will be described.

In an automobile, a light truck or the like, in some cases, the exhaust brake is operated by using a variable capacity supercharger (VGT) instead of the above-described opening and closing valve control system.

The basic operation principle is the same as that of the above-described exhaust brake. When a variable nozzle (VGT vane (provided at the upstream side of the turbine)) generally controlling the turbine rotation speed is controlled in the closing direction, the intake and exhaust resistance increases, and the rotation resistance of the engine increases, so that the braking force is exerted. That is, when the VGT vane of the variable capacity supercharger is closed, the turbine rotation speed increases and the coaxial compressor rotation speed increases. Then, the intake air amount increases, the air is discharged from the engine, the exhaust pipe internal pressure increases and the engine friction increases. Further, the engine friction also increases even when the engine rotation speed is increased.

### PRIOR ART DOCUMENTS

### PATENT DOCUMENTS

Patent Document 1: JP 2003-118433 A

### DISCLOSURE OF THE INVENTION

### PROBLEMS TO BE SOLVED BY THE INVENTION

However, the exhaust brake based on the variable capacity supercharger may simplify the system due to the structure in which the dedicated opening and closing valve is not used, but a problem arises in that the braking force is weakened. This is because the effective area for passing the exhaust gas during the valve closing operation is large. For this reason, the exhaust pipe internal pressure may not be increased.

Further, the sealing condition becomes poor as the number of components of the supercharger body increases. For this reason, a large amount of gas leaks from a gap or the like even when the VGT vane is closed, so that the exhaust pipe internal pressure may not easily increase. This is another cause of the problem.

Furthermore, since the turbine rotation speed of the variable capacity supercharger is determined by the amount of air discharged from the engine and the air amount is dependent on the engine rotation speed, there is also a problem in which the exhaust pipe internal pressure does not easily increase when the engine rotation speed is small.

Therefore, it is an object of the present invention to provide an internal combustion engine exhaust brake control method and an internal combustion engine exhaust brake control device capable of increasing a braking force by increasing an exhaust pipe internal pressure when performing exhaust brake control by a vehicle in which an electric turbocharger is connected to an intake system of an engine.

### MEANS FOR SOLVING THE PROBLEMS

In order to achieve the object, the present invention provides an internal combustion engine exhaust brake control method of driving an electric turbocharger during exhaust brake control to increase a compressor rotation speed to a predetermined rotation speed and to increase an intake air amount when performing the exhaust brake control by a vehicle in which the electric turbocharger is connected to an intake system of an engine.

It is preferable that when an exhaust brake operation switch is turned on, an instructed fuel injection amount is a predetermined threshold value or less, and a clutch is connected, the exhaust brake control is performed and the electric turbocharger is driven so as to increase the compressor rotation speed.

It is preferable that a VGT vane provided at an upstream side of a turbine of the electric turbocharger is closed and an intake throttle valve provided at an intake side is opened during the exhaust brake control.

It is preferable that the exhaust brake control is ended when the instructed fuel injection amount exceeds the predetermined threshold value or the clutch is disconnected.

Further, the present invention is an internal combustion engine exhaust brake control device for performing exhaust brake control by a vehicle in which an electric turbocharger is connected to an intake system of an engine, the internal combustion engine exhaust brake control device including an exhaust brake control unit which drives the electric turbocharger during the exhaust brake control so as to increase a compressor rotation speed to a predetermined rotation speed and to increase an intake air amount.

### EFFECTS OF THE INVENTION

According to the present invention, it is possible to increase the braking force by increasing the exhaust pipe internal pressure when performing the exhaust brake control by the vehicle in which the electric turbocharger is connected to the intake system of the engine.

### BRIEF DESCRIPTION OF THE DRAWINGS

Fig. 1 is a schematic diagram illustrating an example of an engine which becomes a subject of the present invention.
Fig. 2 is a flowchart illustrating an internal combustion engine exhaust brake control method according to the present invention.
Fig. 3 is a diagram illustrating a relation between a compressor rotation speed and an intake and exhaust pressure.
Fig. 4 is a diagram illustrating a relation between a compressor rotation speed and a pumping loss.
Fig. 5 is a diagram illustrating a relation between a compressor rotation speed and an engine friction.

### BEST MODES FOR CARRYING OUT THE INVENTION

Hereinafter, a preferred embodiment of the present invention will be described by referring to the accompanying drawings.

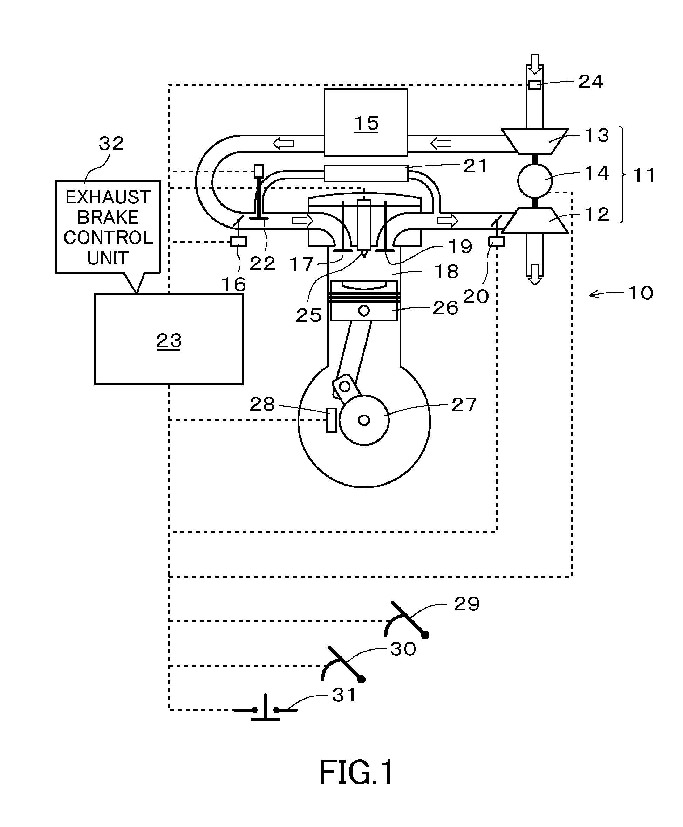

Fig. 1 is a schematic diagram illustrating an example of an engine which becomes a subject of the present invention.

As illustrated in Fig. 1, in an engine 10 which becomes a subject of the present invention, an electric turbocharger 11 is connected to an intake system, a turbine (exhaust turbine) 12 of the electric turbocharger 11 is driven by the exhaust energy, and then a supercharging operation is performed by a compressor (intake compressor) 13.

The electric turbocharger 11 may rotate the turbine 12 and the compressor 13 which are present at the same shaft by a motor 14, so that an arbitrary rotation may be obtained regardless of the flow rate of the exhaust gas. As the electric turbocharger 11, for example, a variable capacity supercharger with a motor or a supercharger capable of controlling an arbitrary compressor rotation speed may be exemplified. Here, the variable capacity supercharger with the motor is used as the electric turbocharger 11.

The air which is compressed by the compressor 13 so as to become a high temperature is cooled at once at a charge air cooler 15, the intake air amount is adjusted by an intake throttle valve 16 provided at the front stage of an EGR valve 22 to be described later, and then the air is supplied to a combustion chamber 18 through an intake valve 17 so as to be used for the combustion.

Subsequently, the exhaust gas which is used for the combustion is discharged through an exhaust valve 19, and drives the turbine 12 by the exhaust energy. The front stage of the turbine 12 is provided with a VGT vane 20 which changes the opening area of the turbine blade in response to the engine rotation speed so as to change the flow rate of the exhaust gas and adjusts the supercharging efficiency or the exhaust pressure.

The exhaust recirculation (EGR) is performed by returning a part of the exhaust gas to the intake air during the exhaust operation. The NOₓ discharge amount may be reduced by performing the EGR.

In the EGR, when the high-temperature exhaust gas is directly used as the intake air, the intake temperature increases, so that the intake air charging efficiency is degraded. For this reason, the exhaust gas is first cooled by an EGR cooler 21 and is input to the intake air. The rear stage of the EGR cooler 21 is provided with the EGR valve 22, and by controlling the opening degree of the EGR valve 22, the EGR amount can be adjusted.

An ECU (Engine Control Unit) 23 which controls the engine 10 is connected with an air flow sensor 24 which detects an intake flow rate, an intake throttle valve 16, a fuel injector 25 which injects a fuel into the combustion chamber 18, the VGT vane 20, the EGR valve 22, a crank angle sensor 28 which detects a crank angle of a crank shaft 27 connected to a piston 26, a motor 14 of the electric turbocharger 11, a throttle pedal sensor 29 which detects an accelerator opening degree, a clutch pedal sensor 30 which detects a connection and a disconnection of a clutch as a unit that transmits the power of the engine 10 to a driving system, an exhaust brake operation switch 31 which operates an exhaust brake, and the like.

Incidentally, the present invention is an internal combustion engine exhaust brake control method of increasing the braking force generated by the exhaust brake by forcedly increasing the exhaust pipe internal pressure when performing the exhaust brake control in the vehicle in which the electric turbocharger 11 is connected to the intake system of the engine 10, and is characterized in that the compressor rotation speed of the electric turbocharger 11 is controlled so as to increase the new intake air amount so that the exhaust pipe internal pressure is forcedly increased.

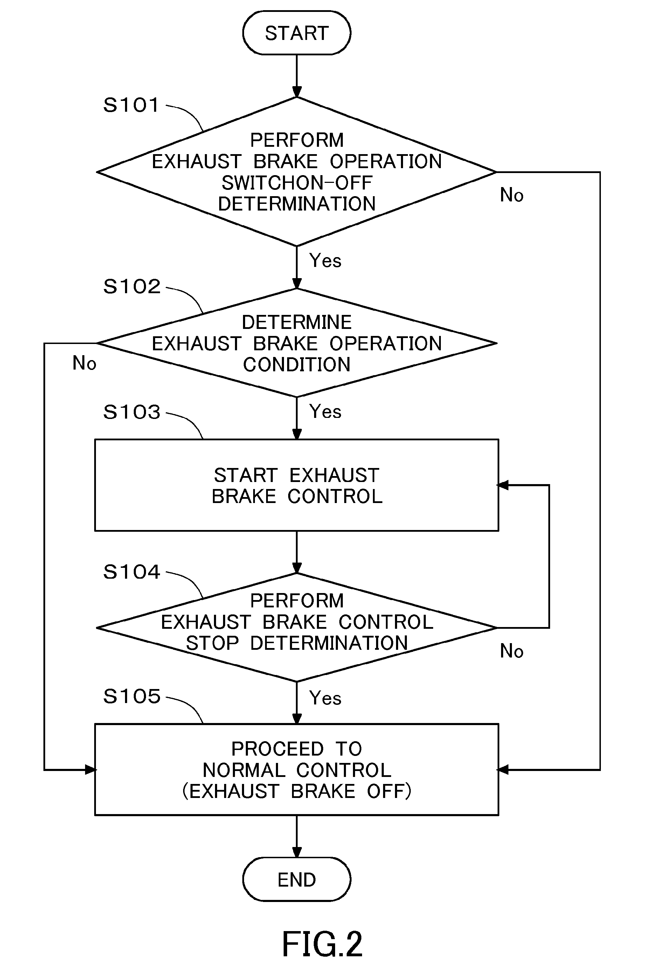

Hereinafter, the internal combustion engine exhaust brake control method according to the present invention will be described by referring to Fig. 2.

First, the ON-OFF determination of the exhaust brake operation switch 31 is performed (S101). The exhaust brake operation switch 31 is an ON-OFF switch which is operated by a driver, where the exhaust brake may be used when the switch is turned on and the exhaust brake may not be used when the switch is turned off. For this reason, it is possible to determine whether the driver wants to use the exhaust brake by performing the ON-OFF determination of the exhaust brake operation switch 31.

In this determination, when the exhaust brake operation switch 31 is turned off, the routine proceeds to the normal control (exhaust brake OFF) (S105).

Meanwhile, when the exhaust brake operation switch 31 is turned on, the exhaust brake operation condition determination is performed (S102). The exhaust brake operation condition determination is performed so as to operate the exhaust brake when the clutch is connected and the accelerator is not stepped on.

Specifically, it is determined whether an instructed fuel injection amount is a predetermined threshold value (which may be set in a state where the fuel is not injected) or less and the clutch pedal sensor 30 is turned off.

When any one of the conditions is not satisfied, the routine proceeds to the normal control (S105). When the instructed fuel injection amount is the predetermined threshold value or less and the clutch is connected, that is, both conditions are satisfied, the exhaust brake control is started (S103).

In the exhaust brake control, the VGT vane 20 is closed at the instructed opening degree obtained from a map determined from the engine rotation speed so as to suppress the outflow of the exhaust gas, and the intake throttle valve 16 is opened at the instructed opening degree obtained from the map determined from the engine rotation speed so as to actively suction the air into the exhaust pipe. Then, the EGR valve 22 is fully closed so as to increase the exhaust pipe internal pressure.

In the present invention, when performing the exhaust brake control, the electric turbocharger 11 is driven during the exhaust brake control and the compressor rotation speed is increased to a predetermined rotation speed so as to increase the intake air amount. The compressor rotation speed at this time is determined from the map determined from the engine rotation speed.

Subsequently, the exhaust brake control stop determination is performed (S104). Specifically, when the instructed fuel injection amount exceeds a predetermined threshold value (which may be set in a state where the fuel is injected), the exhaust brake operation switch 31 is turned off, or the clutch pedal sensor 30 is turned on, that is, the clutch is disconnected, the exhaust brake control is stopped so as to proceed to the normal control (S105). In the other cases, the exhaust brake control is continued (S103).

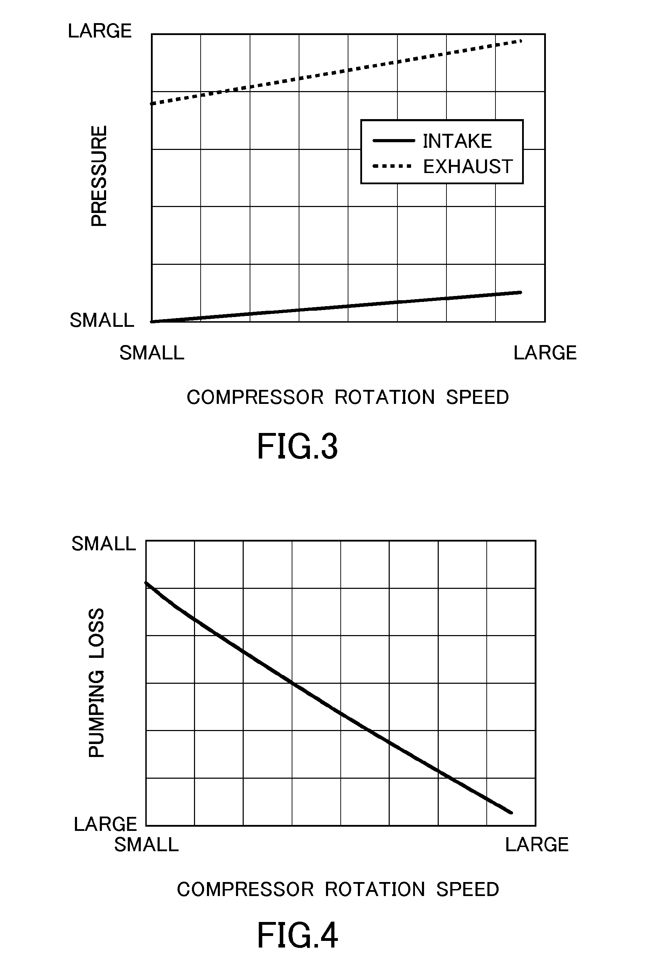

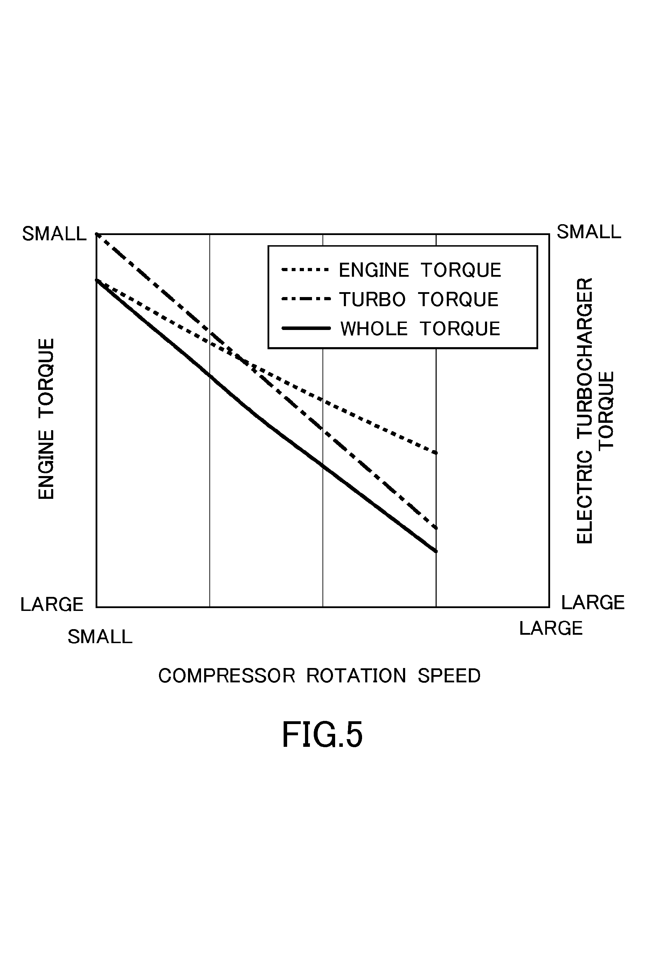

In this way, in the present invention, when performing the exhaust brake control, the electric turbocharger 11 is driven during the exhaust brake control so as to increase the compressor rotation speed to the predetermined rotation speed. Accordingly, as illustrated in Figs. 3 to 5, the intake and exhaust pressure increases and the pumping loss increases. Then, the engine torque (motoring torque) increases, the friction of the engine increases, and the electric turbocharger torque (EAP driving torque) increases, so that the load of the compressor 13 increases. Accordingly, the load increases as a whole and the engine friction increases, so that the large braking force may be obtained.

Such control is performed by an exhaust brake control device which includes an exhaust brake control unit 32. For example, the exhaust brake control unit 32 is mounted as a part of the ECU 23 as illustrated in Fig. 1. The exhaust brake control unit 32 performs the compressor rotation speed control through an inverter (not illustrated) for driving the motor 14.

As described above, according to the present invention, it is possible to increase the braking force by increasing the exhaust pipe internal pressure when performing the exhaust brake control by the vehicle in which the electric turbocharger 11 is connected to the intake system of the engine 10.

Furthermore, when the supercharger capable of arbitrarily controlling the compressor rotation speed is used as the electric turbocharger 11, a shutter valve provided inside the exhaust pipe may be closed instead of the VGT vane 20 so as to perform the exhaust brake control.

### EXPLANATION OF REFERENCE NUMERALS

- 10: engine
- 11: electric turbocharger
- 12: turbine
- 13: compressor
- 14: motor
- 15: charge air cooler
- 16: intake throttle valve
- 17: intake valve
- 18: combustion chamber
- 19: exhaust valve
- 20: VGT vane
- 21: EGR cooler
- 22: EGR valve
- 23: ECU
- 24: air flow sensor
- 25: fuel injector
- 26: piston
- 27: crank shaft
- 28: crank angle sensor
- 29: throttle pedal sensor
- 30: clutch pedal sensor
- 31: exhaust brake operation switch
- 32: exhaust brake control unit

## Claims

1. An internal combustion engine exhaust brake control method of driving an electric turbocharger during exhaust brake control to increase a compressor rotation speed to a predetermined rotation speed and to increase an intake air amount when performing the exhaust brake control by a vehicle in which the electric turbocharger is connected to an intake system of an engine.

2. The internal combustion engine exhaust brake control method according to claim 1,
wherein when an exhaust brake operation switch is turned on, an instructed fuel injection amount is a predetermined threshold value or less, and a clutch is connected, the exhaust brake control is performed and the electric turbocharger is driven so as to increase the compressor rotation speed.

3. The internal combustion engine exhaust brake control method according to claim 1 or 2,
wherein a VGT vane provided at an upstream side of a turbine of the electric turbocharger is closed and an intake throttle valve provided at an intake side is opened during the exhaust brake control.

4. The internal combustion engine exhaust brake control method according to any of claims 1 to 3,
wherein the exhaust brake control is ended when the instructed fuel injection amount exceeds the predetermined threshold value or the clutch is disconnected.

5. An internal combustion engine exhaust brake control device for performing exhaust brake control by a vehicle in which an electric turbocharger is connected to an intake system of an engine, the internal combustion engine exhaust brake control device being **characterized by** comprising:
an exhaust brake control unit which drives the electric turbocharger during the exhaust brake control so as to increase a compressor rotation speed to a predetermined rotation speed and to increase an intake air amount.
